# EUROPEAN PATENT SPECIFICATION

(11) **EP 2 623 340 B1**
(45) Date of publication and mention of the grant of the patent: **11.04.2018**
(21) Application number: 11829221.8
(22) Date of filing: 28.09.2011
(51) Int. Cl.: B60C 11/03, B60C 11/12, B60C 11/13

(54) **HEAVY-LOAD PNEUMATIC TIRE**
SCHWERLASTLUFTREIFEN
PNEUMATIQUE POUR CHARGEMENT LOURD

(30) Priority: 29.09.2010 JP 2010219397
(43) Date of publication of application: 07.08.2013
(73) Proprietor: Bridgestone Corporation, Tokyo 104-8340 (JP)
(72) Inventor: HAGIWARA, Teruhiko, Tokyo 104-8340 (JP)
(74) Representative: Lamb, Martin John Carstairs
(86) International application number: PCT/JP2011/072259
(87) International publication number: WO 2012/043668

(56) References cited:
- EP-A1- 2 058 144
- WO-A1-02/068222
- JP-A- 9 188 110
- JP-A- 2000 219 015
- JP-A- 2001 213 122
- JP-A- 2006 051 873
- JP-A- 2008 132 873

## Description

### Technical Field

The present invention relates to a heavy duty pneumatic tire employed for example in a truck or bus.

### Background Art

In a pneumatic tire for a left-hand side travelling vehicle disclosed in Patent Document 1 below, plural sipe-provided lateral grooves (shallow grooves) inclined ascending towards the right are formed to a center rib and to second ribs formed to a tread. Uneven wear in the vicinity of sipes is during left-hand side travel is thereby suppressed, whilst maintaining wet weather performance.

Patent Document 1: Japanese Patent Application Laid-Open (JP-A) No. 2002-103 922.
Patent Document 2: WO 02/068222 A1 discloses a passenger car winter tire.

### DISCLOSURE OF INVENTION

### Technical Problem

However, a pneumatic tire such as that described above has a tread pattern in which all of the sipe-provided lateral grooves are uniformly inclined ascending towards the right, with the possibility of veering towards the right rather than proceeding in a straight line when rolling over a flat road surface (referred to as tread pattern pull). Moreover, since the sipes are provided inside the lateral grooves, the edge component of the center rib and the second rib is insufficient. There is accordingly room for improvement with regards to wet weather performance.

In consideration of the above circumstances, an object of the present invention is to obtain a heavy duty pneumatic tire capable of suppressing tread pattern pull and also improving wet weather performance.

### Solution to Problem

A heavy duty pneumatic tire of a first aspect of the present invention includes plural ribs partitioned by forming plural main grooves that extend along a tire circumferential direction in a tread, wherein a center rib, that of the plurallity of ribs, is disposed on a tire equator or closest to the tire equator, is formed with a plurality of center shallow grooves that are shallower than the main grooves and with a plurality of center sipes, and the plurality of center shallow grooves and the plurality of center sipes are formed in a row along the tire circumferential direction so as to respectively cross the center rib and intersect with each other.

Note that the "main grooves" and the "center shallow grooves" have groove widths that do not close up when the tread makes ground contact with a road surface, The "center sipes" are configured such that sipe walls contact each other and close up when the tread makes ground contact with the road surface.

In the heavy duty pneumatic tire of the first aspect, the center rib that out of the plural ribs formed to the tread is disposed on the tire equator or closest to the tire equator is formed with the center shallow grooves and the center sipes that cross the center rib. The center shallow grooves and the center sipes intersect with each other, and respectively increase the edge component of the center rib. Note that there is high ground contact pressure at the center rib, and the center rib also makes a large contribution to wet weather performance. Wet weather performance can accordingly be improved by increasing the edge component of the center rib.

Moreover, the center shallow grooves and the center sipes intersect with each other as described above, with the center shallow grooves and the center sipes being inclined in opposite directions to each other. Tread pattern pull can accordingly be suppressed in comparison to in a tread pattern in which both shallow grooves and sipes are uniformly inclined in the same direction.

A heavy duty pneumatic tire of a second aspect of the present invention is the heavy duty pneumatic tire of the first aspect wherein, when the width of the center rib is denoted WR, intersection points between the center shallow grooves and the center sipes are disposed within a region of width 1/2 WR positioned at the width direction center of the center rib.

In the heavy duty pneumatic tire of the second aspect, with respect to the width WR of the center rib, the intersection points between the center shallow grooves and the center sipes are accordingly not disposed within regions of width 1/4 WR from edge portions of the center rib. Note that the center rib is segmented into plural blocks by the intersecting center shallow grooves and center sipes. However, if the intersection points between the center shallow grooves and the center sipes were to be disposed in regions 1/4 WR from the edge portions of the center rib, the sizes of the plural segmented blocks would differ greatly from each other. There would be a concern regarding twisting off, tire tearing and uneven wear of the smaller blocks arising from a susceptibility to differences in rigidity between the plural blocks, however such issues can be avoided in the present aspect due to the configuration described above.

A heavy duty pneumatic tire of a third aspect of the present invention is the heavy duty pneumatic tire of either the first aspect or the second aspect wherein the center shallow grooves and the center sipes are set with a length dimension along the tire circumferential direction within a range of from 8mm to 22mm.

In the heavy duty pneumatic tire of the third aspect, the respective length dimensions of the center shallow grooves and the center sipes along the tire circumferential direction are set within the above numerical value range. Note that the center rib is segmented into plural blocks by the intersecting center shallow grooves and center sipes, however if the length dimension of the intersecting center shallow grooves and the center sipes along the tire circumferential direction were to be less than 8mm, the blocks formed therebetween would become extremely small. On the other hand, if the length dimension is greater than 22mm, the blocks formed between an intersecting center shallow groove and center sipe, and an adjacent intersecting shallow groove and center sipe would become extremely small at the edge sides of the center rib. There would be a concern of twisting off, tire tearing and uneven wear of the smaller blocks arising from a susceptibility to differences in rigidity between the plural blocks, however such issues can be avoided in the present aspect due to the configuration described above.

A heavy duty pneumatic tire of a fourth aspect of the present invention is any one of the first aspect to the third aspect wherein: among the plural ribs, second ribs disposed adjacent to the center rib at both tire width direction outer sides of the center rib are each formed with plural second sipes that are disposed in a row along the tire circumferential direction and that cross the second ribs; and one sipe-type out of the center sipes or the second sipes is inclined ascending towards the right with respect to the tire width direction, and the other sipe-type is inclined ascending towards the left with respect to the tire width direction.

Note that the "second sipes" are configured such that sipe walls contact each other and close up when the tread makes ground contact with the road surface.

In the heavy duty pneumatic tire of the fourth aspect, out of the center sipes formed to the center rib and the second sipes formed to the second ribs, one sipe-type is inclined ascending towards the right with respect to the tire width direction, and the other sipe-type is inclined ascending towards the left with respect to the tire width direction. Namely, the sipe directions of inclination differ between the center ribs and the second ribs. The directions of inclination of the remaining sipes accordingly differ between the center sipes and the second sipes until the later stages of wear, and so the occurrence of tread pattern pull can be suppressed even more efficiently.

A heavy duty pneumatic tire of a fifth aspect of the present invention is the heavy duty pneumatic tire of the fourth aspect wherein: the second ribs are each formed with plural second shallow grooves that are shallower than the main grooves and formed in a row along the tire circumferential direction; and the center shallow grooves and the center sipes, the second shallow grooves and the second sipes formed at one of the second ribs, and the second shallow grooves and the second sipes formed at the other of the second ribs are disposed in different phases from each other with respect to the tire circumferential direction.

Note that the "second shallow grooves" have groove widths that do not close up when the tread makes ground contact with a road surface

In the heavy duty pneumatic tire of the fifth aspect, the center shallow grooves and the center sipes formed at the center rib, the second shallow grooves and the second sipes formed at one of the second ribs, and the second shallow grooves and the second sipes formed at the other of the second ribs are disposed in different phases from each other with respect to the tire circumferential direction. Blocks divided by the center shallow grooves and the center sipes in the center rib, blocks divided by the second shallow grooves and the second sipes in the one of the second ribs, and blocks divided by the second shallow grooves and the second sipes in the other of the second ribs therefore do not make ground contact with the road surface at the same time when the tire is rolling. Pattern pitch noise can accordingly be reduced.

A heavy duty pneumatic tire of a sixth aspect of the present invention is the heavy duty pneumatic tire of either the fourth aspect or the fifth aspect wherein the center sipes and the second sipes open onto center main grooves that are the main grooves disposed between the center rib and the second ribs, and openings of the center sipes onto the center main grooves and the openings of the second sipes onto the center main grooves are disposed in different phases from each other with respect to the tire circumferential direction.

In the heavy duty pneumatic tire of the sixth aspect, when the tire is rolling the center sipes and the second sipes that are opened by rolling close up during kick-out. When this occurs, air inside the center sipes and air inside the second sipes is squeezed out through the openings of each of the sipes onto the center main grooves and into the center main grooves. However since the openings of the center sipes and the second sipes onto the center main grooves are disposed in different phases from each other with respect to the tire circumferential direction, collision can be avoided between the air squeezed out from the center sipes and the air squeezed out from the second sipes inside the center main grooves. Noise arising from such collisions can accordingly be suppressed.

### Advantageous Effects of Invention

As explained above, the heavy duty pneumatic tire according to the present invention is capable of suppressing tread pattern pull and also improving wet weather performance.

### BRIEF DESCRIPTION OF DRAWINGS

Fig. 1 is a plan view of a tread of a heavy duty pneumatic tire according to an exemplary embodiment of the present invention.
Figs. 2A - 2C: Fig. 2A is a cross-section to explain dimensions of a main groove, Fig. 2B is a cross-section to explain dimensions of a shallow groove, and Fig. 2C is a cross-section to explain dimensions of a sipe.
Fig. 3 is a plan view of a tread of heavy duty pneumatic tire according to a comparative example.

### BEST MODE FOR CARRYING OUT THE INVENTION

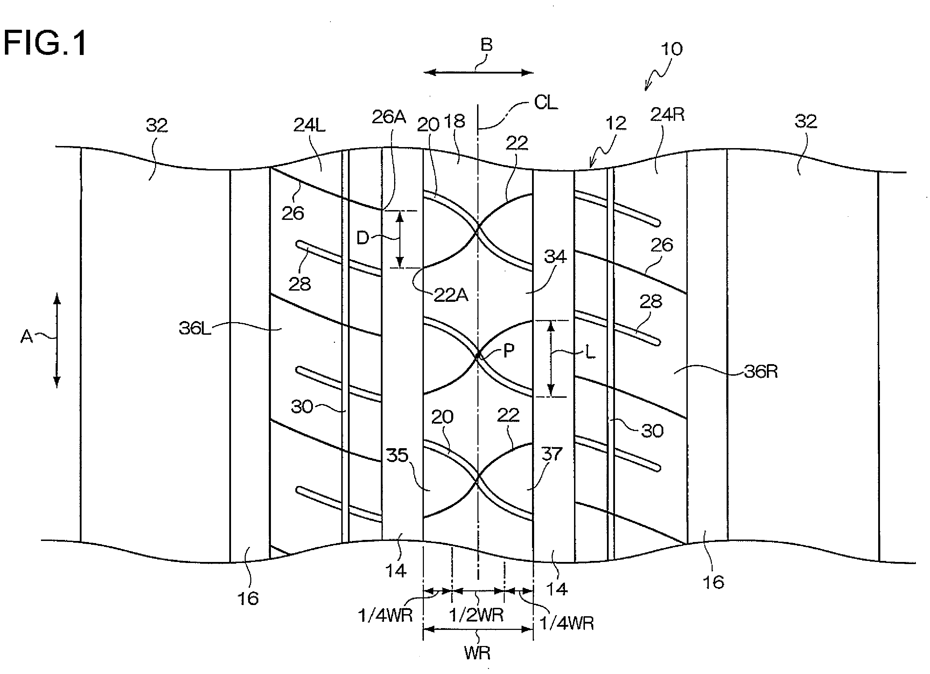

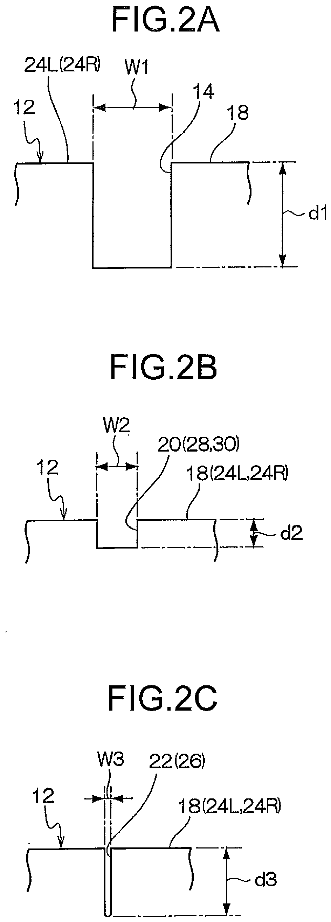

Explanation follows regarding an exemplary embodiment of a heavy duty pneumatic tire 10 of the present invention with reference to Fig. 1 and Fig. 2. Note that in each of the drawings, the arrow A direction indicates the tire circumferential direction and the arrow B direction indicates the tire width direction (tire axial direction).

As shown in Fig. 1, a tread 12 of a heavy duty pneumatic tire 10 (tire size: 295/80 R22.5) of the present exemplary embodiment is formed with a pair of center main grooves 14 (circumferential direction main grooves) extending in straight lines along the tire circumferential direction on both tire width direction sides of a tire equator CL. A pair of second main grooves 16 (circumferential direction main grooves) extending in straight line shapes along the tire circumferential direction are formed at both tire width direction outsides of the pair of center main grooves 14.

A center rib 18 (center land portion) is formed on the tire equator CL extending along the tire circumferential direction and partitioned by the pair of center main grooves 14. Plural center shallow grooves 20 and center sipes 22 are formed at the center rib 18 in a row along the tire circumferential direction so as to cross the center rib 18 in the tire width direction and open onto the center main grooves 14 on both sides.

The center shallow grooves 20 are inclined ascending towards the left with respect to the tire width direction, and curve in a gentle S-shaped curve (a substantially crank shape). The center sipes 22 are inclined ascending towards the right with respect to tire width direction, and are curved similarly to the center shallow grooves 20 in a gentle S-shaped curve. The center shallow grooves 20 and the center sipes 22 intersect with each other inside the center rib 18, with intersection points P between the center shallow grooves 20 and the center sipes 22 disposed on the tire equator CL (at the width direction center of the center rib 18).

Note that although the intersection points P between the center shallow grooves 20 and the center sipes 22 do not necessarily need to be disposed at the width direction center of the center rib 18, they are preferably disposed on the width direction center side of the center rib 18. More specifically, as shown in Fig. 1, when the width of the center rib 18 is denoted WR, the intersection points P are preferably provided within a region of width 1/2 WR positioned at the width direction center of the center rib 18. In other words, preferably the intersection points P are not disposed within regions of width 1/4 WR from width direction edge portions of the center rib 18 (within regions up to 25% of the width of the center rib 18 from the side portions of the center rib 18).

A pair of a second rib 24L and a second rib 24R (both second land portions) are formed so as to be partitioned by the center main grooves 14 and the second main grooves 16 at both tire width direction outsides of the center rib 18 and extend along the tire circumferential direction. Plural second sipes 26 that cross the second ribs 24L, 24R in the width direction and open onto the center main grooves 14 and the second main grooves 16 are formed at the second ribs 24L, 24R in rows along the tire circumferential direction.

Plural second shallow grooves 28 that extend from center main groove 14 side edge portions of the second ribs 24L, 24R towards the tire width direction outsides and terminate inside the second ribs 24L, 24R are also formed at the second ribs 24L, 24R in rows along the tire circumferential direction. The second shallow grooves 28 and the second sipes 26 are alternately formed along the tire circumferential direction, and both are inclined ascending towards the left with respect to the tire width direction. However, the second shallow grooves 28 and the second sipes 26 formed at the second rib 24L are gently curved so as to bulge downwards at a length direction central side, whilst the second shallow grooves 28 and the second sipes 26 formed at the second rib 24R are gently curved so as to bulge upwards at a length direction central side.

Circumferential direction shallow grooves 30 extending in straight line shapes along the tire circumferential direction are also formed at the second ribs 24L, 24R. The circumferential direction shallow grooves 30 intersect with the second shallow grooves 28 and the second sipes 26.

As shown in Fig. 2A, in the present exemplary embodiment the center main grooves 14 and the second main grooves 16 are set with a depth d1 within a range from 8mm to 22mm, and are set with a width W1 within a range from 7mm to 16mm.

As shown in Fig. 2B, the center shallow grooves 20, the second shallow grooves 28 and the circumferential direction shallow grooves 30 are set with a depth d2 within a range from 1mm to 3mm, and are set with a width W2 within a range from 2mm to 5mm. The center shallow grooves 20, the second shallow grooves 28 and the circumferential direction shallow grooves 30 have groove widths such that they do not close up when the tread 12 makes ground contact with a road surface.

As shown in Fig. 2C, the center sipes 22 and the second sipes 26 are set with a depth d3 within a range from 2mm to 20mm. The center sipes 22 and the second sipes 26 are also set with a width W3 such that the sipe wall faces are in contact with each other and closed up when the tread 12 makes ground contact with the road surface.

In other words, in the present exemplary embodiment, the relationships W1 > W2 > W3 and d1 > d3 > d2 are satisfied. Note that the depth d3 of the center sipes 22 may be configured with uniform distribution in the width direction spanning the entire width direction region of the center rib 18, or may be configured with shallower or greater depth on center rib 18 width direction edge portion sides than the depth at the width direction central side.

Moreover, in the present exemplary embodiment, the center shallow grooves 20 and the center sipes 22 are set with a length dimension L along the tire circumferential direction (see Fig. 1) within a range from 8mm to 22mm.

As shown in Fig. 1, in the present exemplary embodiment the center shallow grooves 20 and the center sipes 22 formed at the center rib 18, the second shallow grooves 28 and the second sipes 26 formed at the second rib 24L, and the second shallow grooves 28 and the second sipes 26 formed at the second rib 24R are respectively disposed in different phases from each other with respect to the tire circumferential direction (disposed so as not to be aligned with each other in the tire circumferential direction).

Moreover, in the present exemplary embodiment, openings 22A of the center sipes 22 onto the center main grooves 14 and openings 26A of the second sipes 26 onto the center main grooves 14 are disposed in different phases from each other with respect to the tire circumferential direction. More specifically, a phase difference D between the openings 22A and the openings 26A is set at 5mm or greater. The tire width direction inside portion of the tread 12 is thus configured as described above.

A pair of shoulder ribs 32 (shoulder land portions) are formed at tire width direction outside portions of the tread 12 on the tire width direction outsides of the second main grooves 16. Configuration is such shallow grooves and sipes are not formed at the shoulder ribs 32. Note that wet weather performance could be improved by adding to the edge component by forming shallow grooves and/or sipes to the shoulder ribs 32, however there is a high risk of uneven wear of the shoulder ribs 32 occurring in heavy duty pneumatic tires such as radial tires employed for lorries or buses. In the present exemplary embodiment configuration is accordingly made such that shallow grooves and sipes that can become nuclei for uneven wear are not formed at the shoulder ribs 32.

Explanation follows regarding operation and advantageous effects of the present exemplary embodiment.
In the heavy duty pneumatic tire 10 configured as described above, the center shallow grooves 20 and center sipes 22 that cross the center rib 18 are formed at the center rib 18 that is disposed on the tire equator CL out of the plural ribs formed at the tread 12. The center shallow grooves 20 and the center sipes 22 intersect with each other, and respectively increase the edge component of the center rib 18. The second shallow grooves 28 that terminate inside the second ribs 24L, 24R, and the second sipes 26 that cross the second ribs 24L, 24R are formed at the second ribs 24L, 24R that are disposed on both tire width direction outsides of the center rib 18. The second shallow grooves 28 and the second sipes 26 increase the edge component of the second ribs 24L, 24R.

The center rib 18 and the second ribs 24L, 24R that are disposed to the tire width direction central side of the tread 12 are at low risk of uneven wear occurring due to the high ground contact pressure, whilst at the same time making a large contribution to wet weather performance. As in the present exemplary embodiment, wet weather performance can therefore be improved by concentrating the edge component in the center rib 18 and the second ribs 24L, 24R, without detriment to the uneven wear performance.

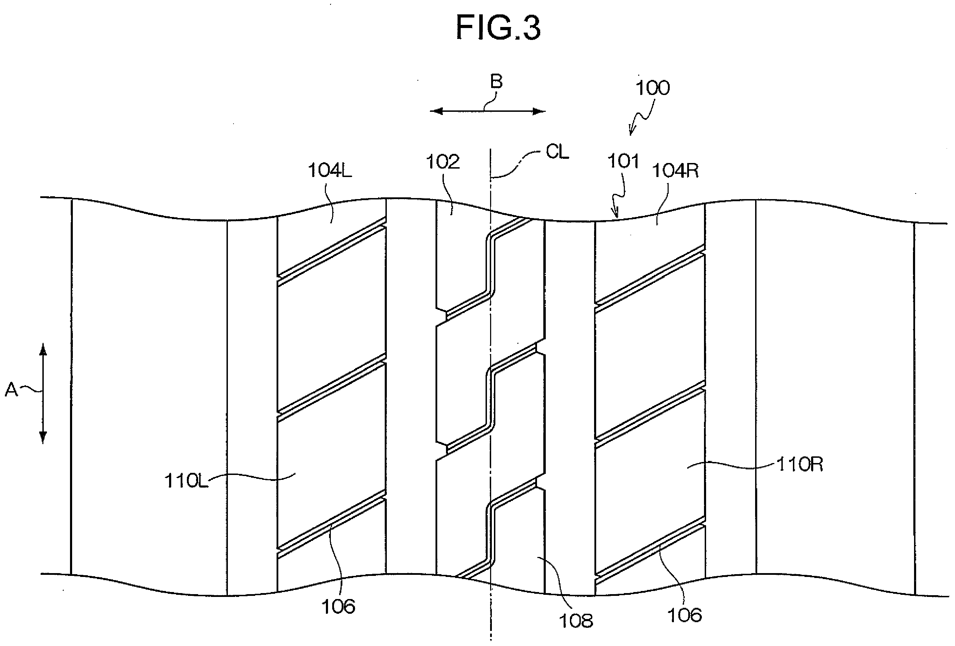

Moreover, in the present exemplary embodiment, the center shallow grooves 20 and the center sipes 22 intersect with each other as described above, with the center shallow grooves 20 and the center sipes 22 having opposite directions of inclination to each other. Accordingly, the occurrence of tread pattern pull can be suppressed in comparison to the tread pattern of a tread 101 of a related heavy duty pneumatic tire 100 (comparative example) illustrated in Fig. 3, wherein sipe-provided lateral grooves 106 (shallow grooves) formed at a center rib 102 and to second ribs 104L, 104R are all uniformly inclined in the same direction.

Note that in cases in which only the center sipes 22 are formed at the center rib 18, there is a decrease in the rigidity of the center rib 18. Furthermore, in cases in which only the center shallow grooves 20 of shallower groove depth are formed at the center rib 18, there is an insufficient edge component in the later stages of wear. In the present exemplary embodiment, however, both the center sipes 22 and the center shallow grooves 20 are provided to the center rib 18, enabling the above issues to be resolved.

In order to increase the edge component of the center rib 18, adding intermediate similar shallow grooves or sipes to existing grooves (fine grooves, hot water grooves), or simply doubling the pitch of the grooves might be considered, however in such cases, there is a decrease in the rigidity of blocks divided by the grooves. Since the high ground contact pressure at the center rib 18 is high, as described above, there would be a concern of twisting off and tire tearing if the rigidity is low, however it is possible to increase the edge component whilst suppressing a reduction in the rigidity of blocks 34, 35, 37 by making the center shallow grooves 20 and the center sipes 22 intersect with each other as in the present exemplary embodiment.

Moreover, in the present exemplary embodiment, the center sipes 22 formed at the center rib 18 are inclined ascending towards the right with respect to the tire width direction, and the second sipes 26 formed at the second ribs 24L, 24R are inclined ascending towards the left with respect to the tire width direction. Namely, the directions of inclination of the center sipes 22 and the second sipes 26 differ from each other. Accordingly, the directions of inclination of the sipes differ between the center rib 18 and the second ribs 24L, 24R. The directions of inclination of the remaining sipes accordingly differ between the center sipes 22 and the second sipes 26 until the later stages of wear, and so reaction force towards one tire width direction side that is imparted to the center rib 18 from the road surface when the tire is rolling is countered by reaction force towards the other tire width direction side imparted to the second ribs 24L, 24R from the road surface. The occurrence of tread pattern pull can accordingly be suppressed even more efficiently.

Moreover, in the present exemplary embodiment, with respect to the width WR of the center rib 18, the intersection points P between the center shallow grooves 20 and the center sipes 22 are provided within the region of width 1/2 WR positioned to the width direction center of the center rib 18, and the intersection points P are not disposed within the regions up to width 1/4 WR from the width direction edge portions of the center rib 18. The center rib 18 is segmented into the plural blocks 34, 35, 37 by the intersecting center shallow grooves 20 and center sipes 22. However, were the intersection points of the center shallow grooves 20 and the center sipes 22 to be disposed in the regions 1/4 WR from the width direction edge portions of the center rib 18, the sizes of the blocks 35 and the blocks 37 would differ greatly from each other. There would be a concern of twisting off, tire tearing and uneven wear of the smaller blocks arising from a susceptibility to differences in rigidity between the plural blocks, however such issues can be avoided in the present exemplary embodiment due to the configuration described above.

In the present exemplary embodiment, the center shallow grooves 20 and the center sipes 22 are set with the length dimension L along the tire circumferential direction within the range from 8mm to 22mm. Note that if the length dimension L is less than 8mm, the blocks 35, 37 become extremely small. However, if the length dimension L is greater than 22mm, the blocks 34 become extremely small on the width direction edge sides of the center rib 18. There would be a concern in such cases of twisting off, tire tearing and uneven wear of the smaller blocks arising from differences in rigidity between the plural blocks, however such issues can be avoided in the present exemplary embodiment due to the configuration described above.

In the present exemplary embodiment, the center shallow grooves 20 and the center sipes 22 formed at the center rib 18, the second shallow grooves 28 and the second sipes 26 formed at the second rib 24L, and the second shallow grooves 28 and the second sipes 26 formed at the second rib 24R are respectively disposed in different phases from each other with respect to the tire circumferential direction. The blocks 34, 35, 37 divided by the center shallow grooves 20 and the center sipes 22 in the center rib 18, blocks 36L divided by the second shallow grooves 28 and the second sipes 26 in the second rib 24L, and blocks 36R divided by the second shallow grooves 28 and the second sipes 26 in the second rib 24R accordingly do not make ground contact with the road surface at the same time when the tire is rolling. Pattern pitch noise can accordingly be reduced.

Namely, in the comparative example illustrated in Fig. 3, the sipe-provided shallow grooves 106 formed at the center rib 102, the sipe-provided shallow grooves 106 formed at the second rib 104L, and the sipe-provided shallow grooves 106 formed at the second rib 104R are disposed in the same phase with respect to the tire circumferential direction. Accordingly, blocks 108 of the center rib 102, blocks 110L of the second rib 104L, and blocks 110R of the second rib 104R make ground contact with the road surface at the same time when the tire is rolling. There is accordingly an increase in pattern pitch noise in the comparative example, however in the present exemplary embodiment noise can be reduced despite increasing the edge component due to the configuration described above.

Moreover, in the present exemplary embodiment the openings 22A of the center sipes 22 onto the center main grooves 14, and the openings 26A of the second sipes 26 onto the center main grooves 14 are disposed in different phases from each other with respect to the tire circumferential direction. A further reduction in noise is accordingly possible. Namely, when the tire is rolling the center sipes 22 and the second sipes 26 that are opened by rolling close up during kick-out. When this occurs, air inside the center sipes 22 and inside the second sipes 26 is squeezed out through the openings 22A, 26A into the center main grooves 14. However since the openings 22A, 26A are disposed in different phases from each other with respect to the tire circumferential direction as described above, collision can be avoided between the air squeezed out from the center sipes 22 and the air squeezed out from the second sipes 26 inside the center main grooves 14. Noise caused by such collisions can accordingly be suppressed. Note that such collision of air can be suppressed well by setting the phase difference D between the openings 22A and the openings 26A at 5mm or greater as in the present exemplary embodiment, thereby enabling the noise suppressing effect to be enhanced.

Note that in the exemplary embodiment described above, configuration is made with all of the plural center shallow grooves 20 inclined ascending towards the right with respect to the tire width direction, and all of the plural center sipes 22 inclined ascending towards the left with respect to the tire width direction. However the present invention is not limited thereto, and the plural center sipes 22 may be formed with directions of inclination alternating between ascending to the right, ascending to the left, ascending to the right and ascending to the left, with the center shallow grooves 20 formed so as to intersect with each of the center sipes 22.

In the exemplary embodiment described above, configuration is made with the center rib 18 disposed on the tire equator CL. However the present invention is not limited thereto and fundamentally the same operation and advantageous effects to those of the exemplary embodiment described above can be obtained by providing mutually intersecting center shallow grooves and center sipes to center ribs that are the land portions closest to the tire equator CL in tires wherein a main groove extending in the tire circumferential direction is formed on the tire equator CL, such as in four-ribbed or six-ribbed tires.

There is no limitation to the dimensions and the like of each portion to the numerical values of the exemplary embodiment described above, and appropriate changes are possible within a range not departing from the scope of the present invention as defined by the claims.

### Test Example

In order to confirm the advantageous effects of the present invention, the related heavy duty pneumatic tire (Comparative Example) illustrated in Fig. 3 and a heavy duty pneumatic tire applied with the present invention (a heavy duty pneumatic tire according to the exemplary embodiment described above. Referred to below as "Example") are prepared, and running tests using real cars on a dry road surface, running tests using real cars on a wet road surface, and platform-based noise tests, are performed.

Details of the running tests are as follows.
- location: flat test course
- vehicle employed: 2 - D (bus)
- number of vehicles: 2
- number of test tires: 6 per vehicle for both the Example and the Comparative Example
In the platform-based noise test, noise is measured when at 90km/h.

In the results of the dry road surface running test, no problems with tread pattern pull are identified by the test driver for the Example. In the results of the wet road surface running test, the Example achieves a lap time of 2 seconds shorter than that of the Comparative Example on an asphalt surfaced test course with a corner radius of 37m. Moreover, in the results of the platform-based noise test, a reduction in noise of 3.5 dB compared to the Comparative Example is confirmed for the Example.

From the above tests, it is confirmed that the tire of the Example applied with the present invention exhibits improved performance compared to the tire of the Comparative Example in each of the areas of dry road surface running performance, wet road surface running performance, and low noise performance.

## Claims

1. A heavy duty pneumatic tire for a truck or a bus (10), comprising a plurality of ribs partitioned by forming a plurality of main grooves (14) that extend along a tire circumferential direction in a tread (12), wherein a center rib (18), that, of the plurality of ribs, is disposed on a tire equator or closest to the tire equator, is formed with a plurality of center shallow grooves (20) that are shallower than the main grooves and with a plurality of center sipes (22), and the plurality of center shallow grooves and the plurality of center sipes are formed in a row along the tire circumferential direction so as to respectively cross the center rib and intersect with each other.

2. The heavy duty pneumatic tire of claim 1, wherein:
when the width of the center rib (18) is denoted WR, intersection points between the center shallow grooves (20) and the center sipes (22) are disposed within a region of width 1/2 WR positioned at the width direction center of the center rib.

3. The heavy duty pneumatic tire of either claim 1 or claim 2, wherein the center shallow grooves (20) and the center sipes (22) are set with a length dimension along the tire circumferential direction within a range of from 8mm to 22mm.

4. The heavy duty pneumatic tire of any one of claim 1 to claim 3, wherein:
among the plurality of ribs, second ribs (24L, 24R) disposed adjacent to the center rib (18) at both tire width direction outer sides of the center rib are each formed with a plurality of second sipes (26) that are disposed in a row along the tire circumferential direction and that cross the second ribs; and
one sipe-type out of the center sipes or the second sipes is inclined ascending towards the right with respect to the tire width direction, and the other sipe-type is inclined ascending towards the left with respect to the tire width direction.

5. The heavy duty pneumatic tire of claim 4, wherein:
the second ribs (24L, 24R) are each formed with a plurality of second shallow grooves (28) that are shallower than the main grooves (14) and formed in a row along the tire circumferential direction; and
the center shallow grooves (20) and the center sipes (22), the second shallow grooves and the second sipes (26) formed at one of the second ribs, and the second shallow grooves and the second sipes formed at the other of the second ribs are disposed in different phases from each other with respect to the tire circumferential direction.

6. The heavy duty pneumatic tire of either claim 4 or claim 5, wherein:
the center sipes (22) and the second sipes (26) open onto center main grooves (14) that are the main grooves disposed between the center rib (18) and the second ribs (24L, 24R), and openings of the center sipes onto the center main grooves and openings of the second sipes onto the center main grooves are disposed in different phases from each other with respect to the tire circumferential direction.

## Patentansprüche

1. Schwerlast-Luftreifen für einen Lastkraftwagen oder einen Bus (10), wobei der Reifen mehrere Rippen umfasst, die unterteilt werden durch das Bilden mehrerer Hauptrillen (14), die sich entlang einer Reifenumfangsrichtung in einer Lauffläche (12) erstrecken, wobei eine Mittelrippe (18), die, von den mehreren Rippen, auf einem Reifenäquator oder dem Reifenäquator am nächsten angeordnet ist, mit mehreren flachen Mittelrillen (20), die flacher sind als die Hauptrillen, und mit mehreren Mittellamellen (22) geformt ist, und die mehreren flachen Mittelrillen und die mehreren Mittellamellen so in einer Reihe entlang der Reifenumfangsrichtung geformt sind, dass sie jeweils die Mittelrippe kreuzen und einander überschneiden.

2. Schwerlast-Luftreifen nach Anspruch 1, wobei:
wenn die Breite der Mittelrippe (18) mit WR bezeichnet wird, Überschneidungspunkte zwischen den flachen Mittelrillen (20) und den Mittellamellen (22) innerhalb eines Bereichs einer Breite 1/2 WR angeordnet sind, der an der Mitte der Mittelrippe in der Breitenrichtung positioniert ist.

3. Schwerlast-Luftreifen nach Anspruch 1 oder Anspruch 2, wobei die flachen Mittelrillen (20) und die Mittellamellen (22) mit einer Längenabmessung entlang der Reifenumfangsrichtung innerhalb eines Bereichs von 8 mm bis 22 mm festgesetzt sind.

4. Schwerlast-Luftreifen nach einem der Ansprüche 1 bis 3, wobei:
unter den mehreren Rippen zweite Rippen (24L, 24R), die angrenzend an die Mittelrippe (18) auf beiden in Reifenbreitenrichtung äußeren Seiten der Mittelrippe angeordnet sind, jeweils mit mehreren zweiten Lamellen (26) geformt sind, die in einer Reihe entlang der Reifenumfangsrichtung angeordnet sind und welche die zweiten Rippen kreuzen, und
eine Lamellenart von den Mittellamellen oder den zweiten Lamellen nach rechts hin ansteigend in Bezug auf die Reifenbreitenrichtung geneigt ist und die andere Lamellenart nach links hin ansteigend in Bezug auf die Reifenbreitenrichtung geneigt ist.

5. Schwerlast-Luftreifen nach Anspruch 4, wobei:
die zweiten Rippen (24L, 24R) jeweils mit mehreren zweiten flachen Rillen (28) geformt sind, die flacher sind als die Hauptrillen (14) und in einer Reihe entlang der Reifenumfangsrichtung geformt sind, und
die flachen Mittelrillen (20) und die Mittellamellen (22), die zweiten flachen Rillen und die zweiten Lamellen (26), die an der einen der zweiten Rippen geformt sind, und die zweiten flachen Rillen und die zweiten Lamellen, die an der anderen der zweiten Rippen geformt sind, in voneinander unterschiedlichen Phasen in Bezug auf die Reifenumfangsrichtung angeordnet sind.

6. Schwerlast-Luftreifen nach Anspruch 4 oder Anspruch 5, wobei:
sich die Mittellamellen (22) und die zweiten Lamellen (26) auf mittlere Hauptrillen (14) öffnen, die Hauptrillen sind, die zwischen der Mittelrippe (18) und den zweiten Rippen (24L, 24R) angeordnet sind, und Öffnungen der Mittellamellen auf die mittleren Hauptrillen und Öffnungen der zweiten Lamellen auf die mittleren Hauptrillen in voneinander unterschiedlichen Phasen in Bezug auf die Reifenumfangsrichtung angeordnet sind.

## Revendications

1. Pneumatique pour charge lourde pour un camion ou un bus (10), comprenant une pluralité de nervures séparées par la formation d'une pluralité de rainures principales (14) qui s'étendent le long de la direction circonférentielle du pneu dans une bande de roulement (12), dans lequel une nervure centrale (18), parmi la pluralité de nervures disposée sur un équateur du pneu ou le plus près de l'équateur du pneu, est formée en comportant une pluralité de rainures centrales peu profondes (20) qui sont moins profondes que les rainures principales et une pluralité de lamelles centrales (22), et la pluralité de rainures centrales peu profondes et la pluralité de lamelles centrales sont formées en rangée le long de la direction circonférentielle du pneu de façon à traverser respectivement la nervure centrale et s'entrecroiser les unes avec les autres.

2. Pneumatique pour charge lourde selon la revendication 1, dans lequel :
en désignant la largeur de la nervure centrale (18) WR, des points d'intersection entre les rainures centrales peu profondes (20) et les lamelles centrales (22) sont disposés à l'intérieur d'une région de largeur égale à ½ WR positionnée au milieu, dans le sens de la largeur, de la nervure centrale.

3. Pneumatique pour charge lourde selon la revendication 1 ou la revendication 2, dans lequel les rainures centrales peu profondes (20) et les lamelles centrales (22) sont définies avec une dimension de longueur le long de la direction circonférentielle du pneu comprise entre 8 mm et 22 mm.

4. Pneumatique pour charge lourde selon l'une quelconque des revendications 1 à 3, dans lequel :
parmi la pluralité des nervures, des secondes nervures (24L, 24R) disposées à côté de la nervure centrale (18) sur les deux côtés extérieurs de la nervure centrale dans le sens de la largeur du pneu sont formées en comportant chacune une pluralité de secondes lamelles (26) qui sont disposées en rangée le long de la direction circonférentielle du pneu et qui traversent les secondes nervures, et
un type de lamelle parmi les lamelles centrales ou les secondes lamelles est incliné de façon à s'élever vers la droite par rapport à la largeur du pneu, et l'autre type de lamelle est incliné de façon à s'élever vers la gauche par rapport à la largeur du pneu.

5. Pneumatique pour charge lourde selon la revendication 4, dans lequel :
les secondes nervures (24L, 24R) sont formées chacune en comportant une pluralité de secondes rainures peu profondes (28) qui sont moins profondes que les rainures principales (14) et sont formées en rangée le long de la direction circonférentielle du pneu, et
les rainures centrales peu profondes (20) et les lamelles centrales (22), les secondes rainures peu profondes et les secondes lamelles (26) formées sur une des secondes nervures, ainsi que les secondes rainures peu profondes et les secondes lamelles formées sur l'autre des secondes nervures sont disposées en décalage les unes des autres par rapport à la direction circonférentielle du pneu.

6. Pneumatique pour charge lourde selon la revendication 4 ou la revendication 5, dans lequel :
les lamelles centrales (22) et les secondes lamelles (26) ouvrent sur des rainures centrales principales (14) qui sont les rainures principales disposées entre la nervure centrale (18) et les secondes nervures (24L, 24R), et des ouvertures des lamelles centrales sur les rainures centrales principales et des ouvertures des secondes lamelles sur les rainures centrales principales sont disposées en décalage les unes des autres par rapport à la direction circonférentielle du pneu.
